# EUROPÄISCHE PATENTSCHRIFT

(11) **EP 0 436 763 B1**
(45) Veröffentlichungstag und Bekanntmachung des Hinweises auf die Patenterteilung: **13.10.1993**
(21) Anmeldenummer: 90100599.1
(22) Anmeldetag: 12.01.1990
(51) Int. Cl.: B01D 9/02, C13F 1/02

(54) **Verfahren zur kontinuierlichen Herstellung von Kristall-Magma**
Process for continuously producing a crystal magma
Procédé pour la production en continu du magma de cristal

(43) Veröffentlichungstag der Anmeldung: 17.07.1991
(73) Patentinhaber: Braunschweigische Maschinenbauanstalt AG, 38122 Braunschweig (DE)
(72) Erfinder: Brunner, HR., Dipl.-Chem., CH-3270 Aarberg (CH); Geckert, K., CH-3270 Aarberg (CH)
(74) Vertreter: Gramm, Werner, Prof., Dipl.-Ing.

(56) Entgegenhaltungen:
- DE-A- 2 113 292
- DE-A- 3 308 275
- FR-A- 2 508 672
- FR-A- 2 597 115
- FR-A- 2 611 215
- US-A- 2 347 073
- US-A- 4 056 364
- CHEMICAL ABSTRACTS, Band 90, 1979, Seite 102, Columbus, Ohio (US); R.F. Madsen et al.:"A new method of supersaturation measurement"

## Beschreibung

Die Erfindung betrifft ein Verfahren zur kontinuierlichen Herstellung von Kristall-Magma in einer gerührten mehrstufigen Verdampfungskristallisation, in deren Stufen der jeweilige Kristallgehalt und in der ersten Stufe die Übersättigung gemessen und davon abhängig der Sirupab- bzw. -zuzug der Stufen geregelt werden, wobei das den gewünschten Kristallgehalt aufweisende Produkt aus der letzten Stufe niveaugeregelt abgepumpt wird.

Ein derartiges Verfahren läßt sich der US-A-4 056 364 entnehmen. Das der ersten Stufe des Verdampfungskristallisators zu-geführte Kristallisat weist eine Kristallgröße von 5 bis 50 oder 60 bis 100 µm auf. Die erste Kristallisationsstufe wird mit Übersättigung von 1.2, die zweite Kristallisationsstufe hingegen mit einer Übersättigung von etwas über 1.0 betrieben.

Die FR-A-2 597 115 offenbart eine Herstellung der Impfkristalle durch Kühlungskristallisation, die durch gleichzeitige Verdampfung und Abkühlung durchgeführt wird.

Der Erfindung liegt die Aufgabe zugrunde, ein effektiver arbeitendes Verfahren zu entwickeln.

Diese Aufgabe wird erfindungsgemäß durch folgende Verfahrensschritte gelöst:
a) Gerührte Herstellung von konglomeratarmen Kühlungskristallisat mit einer mittleren Kristallgrößpe von ca. 0,1 bis 0,15 mm und einer Temperatur von etwa 25 bis 40 °C;
b) das Kühlungskristallisat wird mit einer Übersättigung der Mutterlösung von ca. 1,0 kontinuierlich und mengengeregelt einer Konzentrationsstufe zugeführt und mit dem dort befindlichen Inhalt durch Rühren intensiv vermischt, wobei die genannte Übersättigung durch refraktometrische Regelung angenähert konstanz gehalten, der Muttersirup aber auf das Temperaturniveau der ersten Stufe einer nachfolgenden Verdampfungskristallisation erwärmt und durch Verdampfung eingedickt werden;
c) das aus der Konzentrationsstufe ausgetretende konzentrierte Kristallisat wird der ersten Stufe der Verdampfungskristallisation zugeführt.
d) am Ende jeder Stufe der Verdampfungskristallisation werden neben dem jeweiligen Kristallgehalt die jeweilige Trockensubstanz der Magma gemessen und der Sirupzuzug in die entsprechende Stufe einzeln geregelt;
e) die Kühlungskristallisat-Einzugmenge in die Konzentrationsstufe wird in Abhängigkeit von der Summe aller Sirupzuzugmengen in den einzelnen Stufen der Verdampfungskristallisation geregelt.

Erfindungsgemäß wird somit eine Zuckersuspension (Slurry) einer konditionierten Lösung (Übersättigung 1,01 bis 1,15) zugeführt und in einer Kühlungskristallisationsstufe unter Einhaltung eines Temperaturgradienten zur Einstellung des vorgenannten Übersättigungsbereiches gekühlt. Dabei wachsen die mit der Slurry der Lösung zugeführten Zuckerpartikel je nach Reinheit der Lösung bei einer Chargendauer von 2 bis 3 Stunden auf eine mittlere Größen von 0,1 bis 0,15 mm. Dieses Magma wird mit einer von der möglichen Kühlwassertemperatur der Fabrik abhängigen Temperatur von 25 bis 40 °C einem kontinuierlich arbeitenden Konzentrator zugeführt. In dieser Stufe wird das Magma bei Aufrechterhaltung der Sättigung (1,0) gerührt und angewärmt bei geregelter Wasserverdampfung. Die Erwärmung erfolgt durch Wärmezufuhr und Entspannungsverdampfung auf diejenige Temperatur, die in der ersten Stufe des nachgeschalteten Verdampfungskristallisators herrscht. Dabei wird unter refraktometrischer Regelung verstanden, daß eine mit einem Refraktometer ermittelte Meßgröße als Eingangswert für einen Regler verwendet wird.

Das so konditionierte Magma wird der ersten Stufe eines mehrstufigen, kontinuierlich arbeitenden Verdampfungskristallisators zugeführt, dessen Stufen gerührt und geregelt sowie dem Kristallwachstum angepaßt sind. Die Kammern nehmen also in ihrer Größe (Heizflächen und Inhalt) in Richtung auf den Magma-Austritt zu.

Der Verdampfungskristallisator kann beliebig viele Kammern aufweisen, wobei die Kammeranzahl der gewünschten Endkristallgröße entsprechend festgelegt wird. Dabei ist es vorteilhaft, wenn die Ermittlung des Kristallgehaltes und der Übersättigung am Ausgang jeder Stufe der Verdampfungskristallisation durch Dichte- oder Hochfrequenzmessung erfolgt.

Der Heizdampfdruck sowie der Brüdendruck können in jeder Stufe der Verdampfungskristallisation individuell geregelt werden, wobei der Brüdendruck in allen Kammern vorzugsweise gleich ist.

Der Verdampfungskristallisator erzeugt in Abhängigkeit von der systembedingten Verweilzeitverteilung ein Kristallgrößenspektrum, das vor Weiterverwendung in einer kontinuierlichen Verdampfungskristallisation für die Erzeugung von Produktzucker vorzugsweise klassiert wird. Erfindungsgemäß kann hierfür eine Naßklassierung im Zentrifugalfeld vorgesehen werden. Verwendet wird hierfür vorzugsweise eine Zentrifuge mit einem speziell entwickelten Sieb unterschiedlicher Lochgröße und Lochform. Die Zentrifuge erzeugt zwei Fraktionen höherer Gleichmäßigkeit. Abhängig von der Auslegung der Anlage kann sowohl die Fein- als auch die Grobfraktion als Kristallfuß für die kontinuierlich arbeitende Produktkochstation verwendet werden. Die nicht verwendete Fraktion wird aufgelöst und als Sirup dem Kristallfußverdampfungskristallisator wieder zugeführt. Dies erfolgt erfindungsgemäß in vorteilhafter Weise dadurch, daß der durch die Klassierung erhaltene Feinkristallanteil zusammen mit einer Sirupteilmenge durch Anwärmung aufgelöst und dann in den erforderlichen Teilmengen der Konzentrationsstufe, den einzelnen Stufen der Verdampfungskristallisation und nach entsprechender Abkühlung der Klassierstufe geregelt zugeführt wird.

Das in dem erfindungsgemäßen Verfahren eingesetzte Kühlungskristallisat weist einen Kristallgehalt von vorzugsweise 20 bis 30 % auf.

In der Zeichnung sind vier als Beispiele dienende Anlagen zur Durchführung des erfindungsgemäßen Verfahrens schematisch dargestellt.

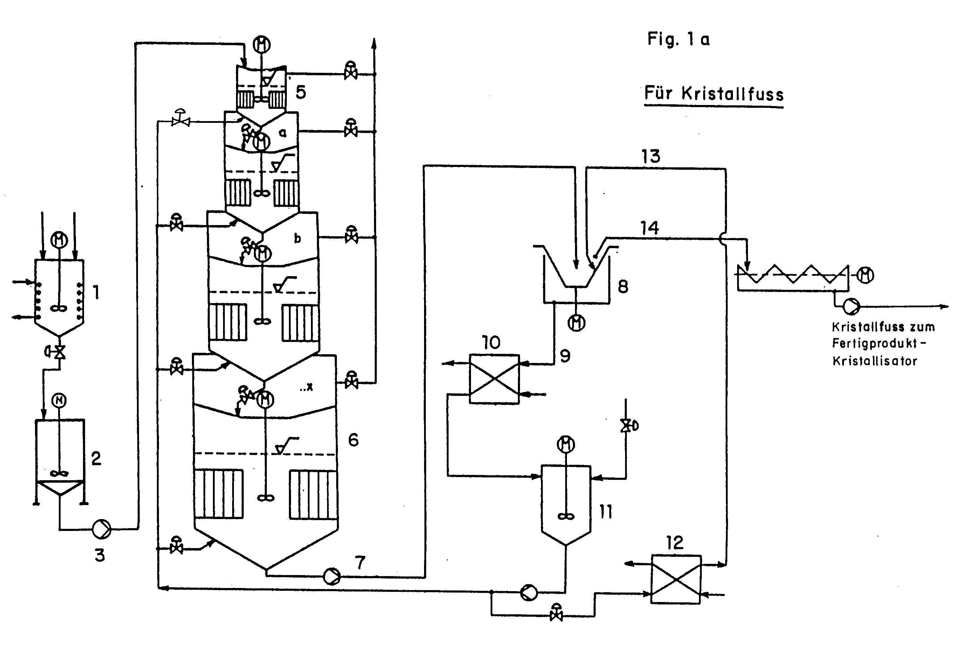

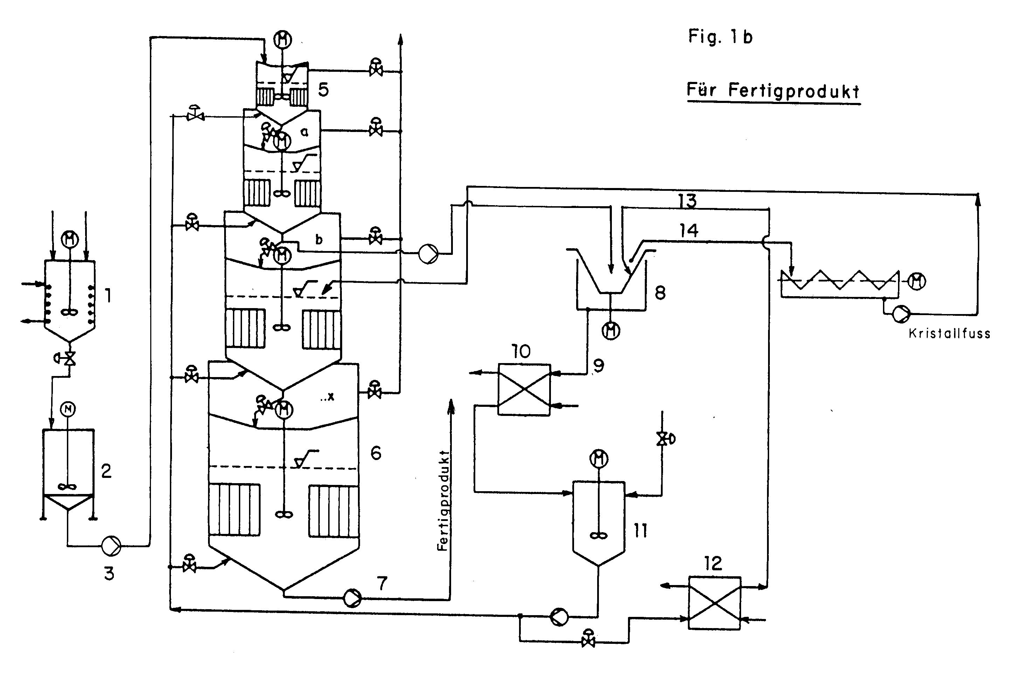

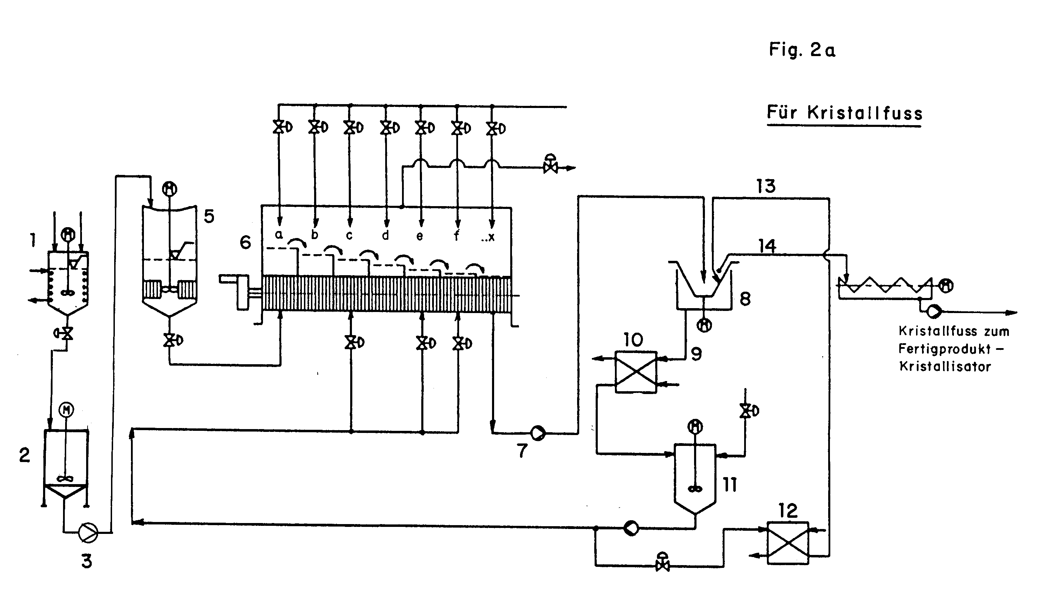

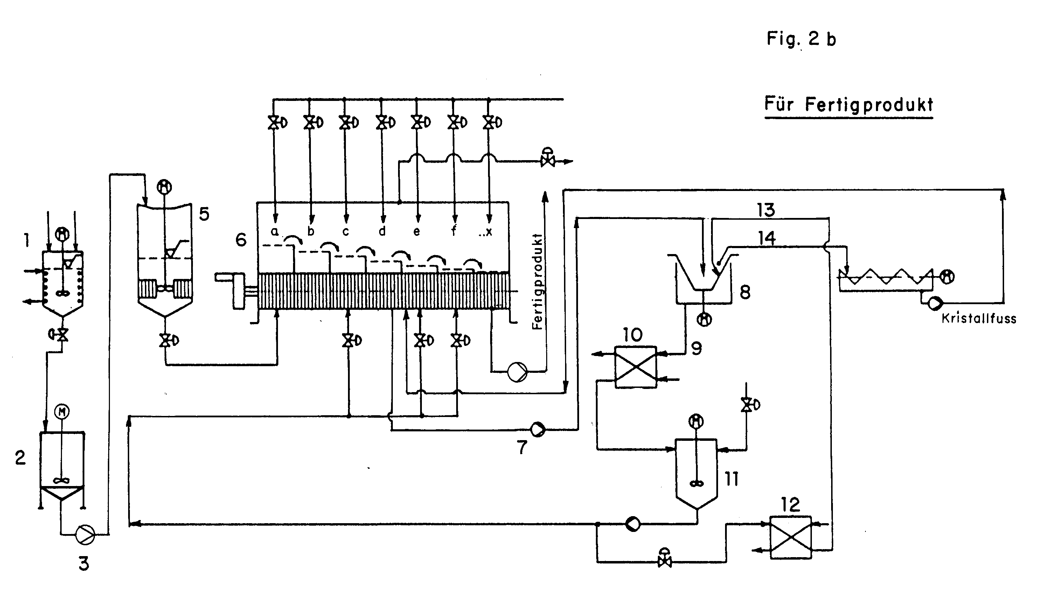

Die in den Figuren 1a und 2a dargestellten Anlagen dienen zur kontinuierlichen Herstellung von Kristallfußmagma. Die in den Figuren 1b und 2b dargestellten Anlagen dienen zur kontinuierlichen Herstellung von Kristall Magma-Fertigprodukt. Alle Anlagen bestehen im wesentlichen aus einem Kühlungskristallisator 1, einem Konzentrator 5, einem Mehrkammerverdampfungskristallisator 6 und einem diesem nachgeschalteten Klassiersystem.

Figur 1a zeigt einen Kühlungskristallisator 1 mit einem eine Rühreinrichtung aufweisenden Vorratsbehälter 2 zur gerührten Herstellung von konglomeratarmen Kühlungskristallisat, das eine mittlere Kristallgröße von ca. 0,1 bis 0,15 mm und eine Temperatur von etwa 25 bis 40° C aufweist und mit einem Massenanteil von ca. 18 % zusammen mit dem Muttersirup das Magma bildet. Je nach Produktart (Nachprodukt, Rohzuckerprodukt, Weißzuckerprodukt) beträgt der Reinheitsbereich des Magmas 77 bis 96 % . Der Kristallgehalt des Kühlungskristallisats liegt vorzugsweise zwischen 20 und 30 % .

Das Magma wird aus dem Kühlungskristallisator 1 durch eine vorzugsweise drehzahlgeregelte Pumpe 3 über eine Rohrleitung einem Konzentrator 5 zugeführt und dort auf eine Temperatur angewärmt die etwa gleich hoch ist wie in der ersten Kammer a eines nachgeschalteten Verdampfungskristallisators. Hierbei wird geregelt Wasser verdampft, so daß die Übersättigung in dieser Phase mit 1,0 konstant bleibt.

Der kontinuierlich arbeitende Mehrkammerverdampfungskristallisator 6 weist bei den Ausführungsbeispielen gemäß Figur 1a und 1b lotrecht untereinander angeordnete Kammern a bis x aufweist, wobei der Konzentrator 5 oberhalb der ersten Kammer a montiert ist. Das Magma fließt geregelt vom Konzentrator 5 bis zur letzten Stufe des Verdampfungskristallisators 6 durch natürliches Gefälle. Zur Erreichung eines konstanten Kristallwachstums werden Wärme und Sirup zugeführt und Wasser durch Verdampfung abgeführt. Dabei werden am Ausgang jeder Stufe der gerührten Verdampfungskristallisation der jeweilige Kristallgehalt sowie die jeweilige Übersättigung der Magma gemessen und der Sirupzuzug in die entsprechende Stufe einzeln geregelt. Die Kühlungskristallisat-Einzugmenge in die Konzentrationsstufe wird in Abhängigkeit von der Summe aller Sirupzuzugmengen in den einzelnen Stufen der Verdampfungskristallisation geregelt.

Das den gewünschten Kristallgehalt aufweisende Magma 7 wird aus der letzten Kammer des Verdampfungskristallisators 6 niveaugeregelt abgepumpt. Die gewünschte Kristallgröße des Magma 7 ergibt sich aus der Wahl der Anzahl Kammern und des Verhältnisses Kühlungskristallisatvorgabe zum Sirupzuzug; die Temperatur ergibt sich aus dem verfügbaren Vakuum und der Reinheit des Produktes. Dieses Magma 7 soll in nachgeschalteten kontinuierlich arbeitenden Verdampfungskristallisatoren (Produktkochapparaten) zur Erzeugung von verkaufsfähigem Zucker mit Kristallgrößen von 0,5 bis 0,8 mm eingesetzt werden oder bei entsprechender Kammeranzahl als Fertigprodukt verwendet werden. Hierfür ist es notwendig, den Produktkochapparaten ein sehr enges Kristallspektrum anzubieten, damit auch die Endkristalle dieser Apparate noch in einer verkaufsfähigen Größenordnung anfallen.

Je nachdem ob der Mehrkammerverdampfungskristallisator 6 für Kristallfuß (Fig.1a) oder Fertigprodukt (Fig. 1b) verwendet wird, kann wahlweise ein Klassiersystem nach oder zwischengeschaltet werden, das im wesentlichen aus einer Klassierzentrifuge 8, einem Wärmetauscher 10, einem Rührbehälter 11 und einem weiteren Wärmetauscher 12 besteht.

Das aus dem Mehrkammerverdampfungskristallisator 6 abgepumpte Magma 7 wird der Klassierzentrifuge 8 zugeführt, die mit speziellen Sieben ausgestattet ist, die eine Naßklassierung im Zentrifugalfeld ermöglichen. Die Klassierung erfolgt bei einer monokristallinen Schicht auf dem Sieb, wobei der Kristalltransport abhängig ist von der Siebneigung, der Zentrifugalkraft sowie des aufzudüsenden Sirups 13. Der nicht erwünschte Feinkristallanteil 9 tritt zusammen mit einer Sirupteilmenge durch die Sieblochung hindurch und wird im Wärmetauscher 10 durch Anwärmung aufgelöst. Der so erhaltene Sirup wird in den Rührbehälter 11 geführt und von hier aus in den erforderlichen Teilmengen dem Konzentrator 5, den einzelnen Kammern des Mehrkammerverdampfungskristallisators 6 und dem Wärmetauscher 12 geregelt zugeführt. Dabei wird die dem Wärmetauscher 12 zugeführte Teilmenge 13 des Sirups auf ca. 30° C abgekühlt und dann auf das Sieb der Klassierzentrifuge 8 aufgedüst.

Das für die weitere Verwendung erwünschte Grobkristallisat 14 verläßt zusammen mit einer Sirupteilmenge die Trommel der Klassierzentrifuge 8 mit einer hohen Geschwindigkeit von < 55 m/sec.. Über die Einstellung der Sirupteilmenge 13 kann der Kristallanteil des sich aus dem Grobkristallisat 14 und der Sirupteilmenge zusammensetzenden Kristallfußmagmas auf ca. 50 % eingestellt werden, das dann den Produktkochapparaten zugeführt wird.

Die Anlage gemäß Figur 2a und 2b unterscheidet sich von der in Figur 1a und 1b dargestellten Ausführungsform unter anderem durch die Bauart des Mehrkammerverdampfungskristallisators 6, der gemäß Figur 2a und 2b eine horizontale Bauweise aufweist und hintereinander geschaltete Kammern a bis x umfaßt. Das aus dem Konzentrator 5 kommende Magma fließt geregelt in die erste Kammer a und durch natürliche Überläufe weiter bis zur Kammer x. Auch hier werden zur Erreichung eines konstanten Kristallwachstums Wärme und Sirup zugeführt und Wasser durch Verdampfung abgeführt.

## Patentansprüche

1. Verfahren zur kontinuierlichen Herstellung von Kristall-Magma in einer gerührten mehrstufigen Verdampfungskristallisation, in deren Stufen der jeweilige Kristallgehalt und in der ersten Stufe die Übersättigung gemessen und davon abhängig der Sirup-ab- bzw. -Zuzug der Stufen geregelt werden, wobei das den gewünschten Kristallgehalt aufweisende Produkt aus der letzten Stufe niveaugeregelt abgepumpt wird, **gekennzeichnet durch** folgende Merkmale:
a) Gerührte Herstellung von konglomeratarmen Kühlungskristallisat mit einer mittleren Kristallgröße von ca. 0,1 bis 0,15 mm und einer Temperatur von etwa 25 bis 40 °C;
b) das Kühlungskristallisat wird mit einer Übersättigung der Mutterlösung von ca. 1,0 kontinuierlich und mengengeregelt einer Konzentrationsstufe zugeführt und mit dem dort befindlichen Inhalt durch Rühren intensiv vermischt, wobei die genannte Übersättigung durch refraktometrische Regelung angenähert konstant gehalten, der Muttersirup aber auf das Temperaturniveau der ersten Stufe einer nachfolgenden Verdampfungskristallisation erwärmt und durch Verdampfung eingedickt werden;
c) das aus der Konzentrationsstufe austretende konzentrierte Kristallisat wird der ersten Stufe der Verdampfungskristallisation zugeführt.
d) am Ende jeder Stufe der Verdampfungskristallisation werden neben dem jeweiligen Kristallgehalt die jeweilige Trockensubstanz der Magma gemessen und der Sirupzuzug in die entsprechende Stufe einzeln geregelt;
e) die Kühlungskristallisat-Einzugmenge in die Konzentrationsstufe wird in Abhängigkeit von der Summe aller Sirupzuzugmengen in den einzelnen Stufen der Verdampfungskristallisation geregelt.

2. Verfahren nach Anspruch 1, dadurch gekennzeichnet, daß das Kühlungskristallisat einen Kristallgehalt von 20 bis 30 % aufweist.

3. Verfahren nach Anspruch 1 oder 2, dadurch gekennzeichnet, daß die Ermittlung des Kristallgehaltes und die Übersättigung am Ausgang jeder Stufe der Verdampfungskristallisation durch Dichte- oder Hochfrequenzmessung erfolgt.

4. Verfahren nach Anspruch 1, 2 oder 3, dadurch gekennzeichnet, daß der Heizdampfdruck in jeder Stufe der Verdampfungskristallisation individuell geregelt wird.

5. Verfahren nach einem der vorhergehenden Ansprüche, dadurch gekennzeichnet, daß der Brüdendruck in jeder Stufe der Verdampfungskristallisation separat regelbar ist.

6. Verfahren nach einem der vorhergehenden Ansprüche, dadurch gekennzeichnet, daß die Größe der Stufen der Verdampfungskristallisation in Anpassung an das Kristallwachstum zu-nimmt.

7. Verfahren nach einem der vorhergehenden Ansprüche, dadurch gekennzeichnet, daß das aus einer Zwischenstufe oder aus der letzten Stufe der Verdampfungskristallisation abgepumpte Magma durch Zentrifugieren klassiert wird.

8. Verfahren nach Anspruch 7, dadurch gekennzeichnet, daß der durch die Klassierung erhaltene Feinkristallanteil zusammen mit einer Sirupteilmenge durch Anwärmung aufgelöst und dann in den erforderlichen Teilmengen der Konzentrationsstufe, den einzelnen Stufen der Verdampfungskristallisation und nach entsprechender Abkühlung der Klassierstufe geregelt zugeführt wird.

## Claims

1. Process for continuously producing a crystal magma in a stirred, multi-stage evaporative crystallization in whose stages the respective crystal content, and, in the first stage, the supersaturation are measured and in dependence thereon the syrup take-off or supply of the stages is controlled, the product having the desired crystal content being pumped off from the final stage in a level-controlled fashion, characterized by the following features:
a) stirred production of low-conglomerate cooler crystallizate having a mean crystal size of approximately 0.1 to 0.15 mm and a temperature of about 25 to 40°C;
b) the cooler crystallizate is fed with a supersaturation of the mother liquor of approximately 1.0 continuously and in a quantity-controlled fashion to a concentration stage and vigorously mixed by stirring with the contents contained therein, said supersaturation being kept approximately constant by refractometric control, but the mother syrup being heated to the temperature level of the first stage of a downstream evaporative crystallization and being thickened by evaporation;
c) the concentrated crystallizate emerging from the concentration stage is fed to the first stage of the evaporative crystallization;
d) at the end of each stage in the evaporative crystallization, the respective dry matter content of the magma is measured in addition to the respective crystal content, and the syrup feed to the corresponding stage is individually controlled;
e) the quantity of cooler crystallizate fed to the concentration stage is controlled as a function of the sum of all the syrup feed quantities to the individual stages of the evaporative crystallization.

2. Process according to Claim 1, characterized in that the cooler crystallizate has a crystal content of 20 to 30%.

3. Process according to Claim 1 or 2, characterized in that the determination of the crystal content and the supersaturation takes place at the outlet of each stage in the evaporative crystallization by density or high-frequency measurement.

4. Process according to Claim 1, 2 or 3, characterized in that the pressure of the heating steam is controlled individually in each stage of the evaporative crystallization.

5. Process according to one of the preceding claims, characterized in that the pressure of the vapours can be controlled separately in each stage of the evaporative crystallization.

6. Process according to one of the preceding claims, characterized in that the size of the stages in the evaporative crystallization increases to match the crystal growth.

7. Process according to one of the preceding claims, characterized in that the magma pumped out of an intermediate stage or out of the last stage of the evaporative crystallization is graded by centrifuging.

8. Process according to Claim 7, characterized in that the fine crystal component obtained by grading is dissolved together with an aliquot of syrup by heating and then fed in a controlled manner in the required aliquots to the concentration stage, the individual stages of the evaporative crystallization and, after suitable cooling, to the grading stage.

## Revendications

1. Procédé pour la production en continu de magma de cristal dans un processus de cristallisation par évaporation sous agitation à paliers multiples, dans lequel la teneur en cristaux dans chacun des paliers ainsi que la sursaturation dans le premier palier sont mesurées et le soutirage ou l'apport de sirop aux paliers est régulé en fonction de ces mesures, le produit présentant la teneur en cristaux désirée étant extrait du dernier palier par pompage, avec régulation de niveau, caractérisé par les particularités suivantes ;
a) production sous agitation d'un cristallisat de refroidissement, faiblement aggloméré, présentant une taille moyenne de cristaux d'environ 0,1 à 0,15 mm et une température d'à peu près 25 à 40°C ;
b) le cristallisat de refroidissement est amené de façon continue et en quantité régulée à un étage de concentration, avec une sursaturation de la solution-mère d'environ 1,0, et est mélangé intensément, par agitation, avec le contenu déjà là, la sursaturation mentionnée étant maintenue sensiblement constante par régulation réfractométrique, le sirop-mère étant cependant porté par chauffage au niveau de température du premier palier d'une cristallisation par évaporation, qui fait suite, et étant épaissi par évaporation ;
c) le cristallisat concentré sortant de l'étage de concentration est amené au premier palier de cristallisation par évaporation ;
d) à la fin de chacun des paliers de cristallisation par évaporation, les matières sèches respectives du magma sont mesurées ainsi que la teneur en cristaux respective ; et l'apport de sirop dans le palier correspondant est régulé individuellement ;
e) la quantité de cristallisat de refroidissement introduite dans l'étage de concentration est régulée en fonction de la somme de toutes les quantités de sirop d'apport dans les différents paliers de cristallisation par évaporation.

2. Procédé selon la revendication 1, caractérisé en ce que le cristallisat de refroidissement présente une teneur en cristaux de 20 à 30 %.

3. Procédé selon la revendication 1 ou 2, caractérisé en ce que la détermination de la teneur en cristaux et de la sursaturation à la sortie de chacun des paliers de cristallisation par évaporation se fait par densimétrie ou mesure haute fréquence.

4. Procédé selon la revendication 1, 2 ou 3, caractérisé en ce que la pression de la vapeur de chauffage est régulée individuellement dans chacun des paliers de cristallisation par évaporation.

5. Procédé selon l'une des revendications précédentes, caractérisé en ce que la pression de vapeur libérée peut être régulée séparément dans chacun des paliers de cristallisation par évaporation.

6. Procédé selon l'une des revendications précédentes, caractérisé en ce que la dimension des paliers de cristallisation par évaporation augmente en harmonie avec la croissance des cristaux.

7. Procédé selon l'une des revendications précédentes, caractérisé en ce que le magma extrait par pompage d'un palier intermédiaire ou du dernier palier de cristallisation par évaporation est soumis à un calibrage par centrifugation.

8. Procédé selon la revendication 7, caractérisé en ce que la part de cristaux fins obtenue par le calibrage est dissoute par chauffage avec une quantité partielle de sirop, puis est amenée, de façon régulée et dans les proportions requises, à l'étage de concentration, aux différents paliers de cristallisation par évaporation et, après refroidissement approprié, à l'étage de calibrage.
